# EUROPÄISCHE PATENTSCHRIFT

(11) **EP 2 898 541 B1**
(45) Veröffentlichungstag und Bekanntmachung des Hinweises auf die Patenterteilung: **24.06.2020**
(21) Anmeldenummer: 13750293.6
(22) Anmeldetag: 09.08.2013
(51) Int. Cl.: H02S 20/00, F24S 10/17, F24S 20/70, F24S 25/60

(54) **AUF FOLIEN SCHWIMMENDES ENERGIEERZEUGUNGSSYSTEM**
POWER GENERATION SYSTEM THAT FLOATS ON FOILS
SYSTÈME DE PRODUCTION D'ÉNERGIE FLOTTANT SUR DES FEUILLES

(30) Priorität: 18.09.2012 DE 102012108741
(43) Veröffentlichungstag der Anmeldung: 29.07.2015
(73) Patentinhaber: Benecke-Kaliko AG, 30419 Hannover (DE)
(72) Erfinder: HAARBURGER, Tobias, 30167 Hannover (DE); STÖLTING, Andreas, 30989 Gehrden (DE)
(74) Vertreter: Kilsch, Armin Ralph
(86) Internationale Anmeldenummer: PCT/EP2013/066693
(87) Internationale Veröffentlichungsnummer: WO 2014/044467

(56) Entgegenhaltungen:
- EP-A1- 2 299 499
- WO-A2-2007/062278
- DE-A1- 19 857 174

## Beschreibung

Die Erfindung betrifft ein schwimmendes Energieerzeugungssystem, welches ein oder mehrere flächige Module zur Energieerzeugung und/oder Energieumwandlung aufweist, vorzugsweise Photovoltaik-Zellen oder Sonnenkollektoren, die mit mindestens einem Trag- oder Schwimmkörper verbunden sind.

Schwimmende Energieerzeugungssysteme in Form von photovoltaischen Systemen in Verbindung mit Abdeckungen von Wasseroberflächen oder in Wasser eingetauchte photovoltaische Systeme sind im Stand der Technik bekannt.

So offenbart die WO 2008/012791 A1 ein in Wasser integriertes bzw. zur Verwendung in einer Wasser-Umgebung angepasstes photovoltaisches System, bei dem Photovoltaik-Zellen auf einer Folie, einer so genannten Geofolie angebracht sind. Die Geofolie kann dabei auf dem Wasser schwimmend angeordnet sein oder soweit in Wasser eingetaucht schweben, dass die Photovoltaik-Zellen auf der Folie von Wasser überspült und somit gereinigt und gekühlt werden. Unterschiedliche UV resistente Beschichtungsmaterialien aus Polymeren sind ebenso offenbart wie eine aufblasbare Geofolie.

Die US 2010/0294331 A1offenbart eine Anordnung von Photovoltaik-Zellen, eingebettet in einer Membrane oder angeordnet auf einer Membrane, welche als Abdeckung auf eine Wasserreservoir gelegt wird, also etwa auf die Oberfläche eines Swimmingpools oder eines Teiches, und welche dann der Energieerzeugung dient. Das System als ganzes schwimmt auf dem Wasser oder kann auch eingetaucht betrieben werden.

Die DE 39 19 125 A1 offenbart einen schwimmfähigen Solarzellenkollektor geringer Dichte, dessen Photovoltaik-Zellen wasserdicht in transparenten Kunststoff eingebettet sind, wobei zwischen den Photovoltaik-Zellen Spüllöcher angeordnet sind, welche der Oberflächenreinigung dienen oder zu hohen Wasserdruck bei Wellengang vermeiden sollen.

Die DE 199 08 645 A1 offenbart einen schwimmenden Sonnenkollektor mit einer wasserdicht in transparente Folie eingebetteten Dünnschicht-Photovoltaik, wobei der Kollektor Laschen oder Löcher aufweist, durch die Stäbe aus Holz oder Bambus eingeschoben werden können, die den Kollektor aufspannen und die Schwimmfähigkeit sichern.

Die DE 198 57 174 A1 offenbart ein im Wasser schwimmendes Solarfoliensystem, bei dem die die Photovoltaik tragende Folie zwischen einer unteren Bodenfolie und einer transparenten Deckfolie eingeschweißt ist und bei dem zwischen den Folien Zwischenräume vorgesehen sind, die einerseits zur Regulierung der Eintauchtiefe unter Einsatz von z. B. Preßluft mit Luft gefüllt werden können um dadurch das Schwimmen des Solarkollektors an der Oberfläche zu erleichtern. Andererseits können dort die Zwischenräume zur Erzielung einer gleichzeitigen Linsen-Wirkung mit leichten Flüssigkeiten, wie etwa Alkohol, gefüllt werden.

Die WO 2010/026542 A1 offenbart zur Erzeugung von elektrischer Energie eine Anordnung von Photovoltaik-Zellen auf einer in Wasser eingetauchten oder auf dem Wasser schwimmenden plattenförmigen festen Struktur (panel). Die Photovoltaik-Zellen können flach aufgelegt oder über Gestänge verstellbar ausgebildet sein. Die Tauchtiefe der Struktur kann beliebig eingestellt werden von "Schwimmen" auf der Oberfläche bis "Tauchen" in z.B. zwei Metern Tiefe. Dies geschieht über Schwimmkörper ("floats"), die mit Luft gefüllt oder mit Flüssigkeiten mit zum Wasser unterschiedlicher Dichte geflutet werden können.

Die WO 2007/062278 A2 offenbart ein System zur Erzeugung elektrischer Energie, bei dem das photovoltaische Element auf einem Schwimmkörper angeordnet ist, welcher direkt im Wasser schwimmt bzw. in das Wasser eingetaucht ist. Die Schwimmkörper können durch Verbindungselemente aneinander gekoppelt werden.

Den bisher im Stand der Technik bekannten Lösungen schwimmender photovoltaischer Systeme haftet der Nachteil an, dass der erforderliche Auftrieb bei gleichzeitiger Festigkeit der Trägerfolien oder photovoltaischen Elemente nur durch ausreichend starke und damit dicke und teuer zu fertigende Folien oder komplizierte Spann- oder Schwimmkörpersysteme erreicht werden kann.

Der Unterbau von z. B. Photovoltaik Modulen muss daher im Gegensatz zu einem festen Untergrund über ausreichend Auftrieb verfügen. Ferner muss dieser Unterbau
ein Gewicht von ca. 40 kg und mehr tragen können. Die Montage muss einfach sein, so dass mehrere tausend Module für Kraftwerksanwendungen mit einem geringen Maschineneinsatz und im Wesentlichen durch Handarbeit zusammengesetzt werden können. Der Unterbau muss zudem zum Betrieb in warmen semi-ariden Gebieten, d.h. in Gebieten, in denen der Niederschlag unterhalb der möglichen Gesamtverdunstung liegt, besonders widerstandsfähig gegenüber Witterungsbedingungen sein.

Für die Erfindung bestand daher die Aufgabe, eine schwimmende Energieerzeugungseinrichtung bereitzustellen, die einfach zu montieren ist, einen genügenden und einstellbaren Auftrieb aufweist und die einfach und günstig herzustellen und zu warten ist.

Gelöst wird diese Aufgabe durch die Merkmale des Hauptanspruchs. Weitere vorteilhafte Ausbildungen sind in den Unteransprüchen offenbart.

Dabei sind die Trag- oder Schwimmkörper auf einer Oberfläche einer ein Flüssigkeitsreservoir abdeckenden Folie angeordnet und mit letzterer verbunden. Die Trag- oder Schwimmkörper weisen dabei eine oder mehrere mit einem Medium/Auftriebsmedium befüllbare abgedichtete Kammern auf. Die Kammern sind dabei in jedem Fall so dimensioniert, dass die Trag- oder Schwimmkörper durch ihren eigenen oder durch das eingefüllte Medium erzeugten Auftrieb in der Flüssigkeit die flächigen Module tragen können. Das Medium kann Luft sein oder eine Flüssigkeit, die wesentlich leichter ist als die Flüssigkeit des Flüssigkeitsreservoirs. Die Tragkörper können hier im Zuge der Auslegung der in aller Regel schwimmenden Folie über eine geeignete Verbindungstechnik angebracht werden. Vorteilhaft ist hier eine lösbare mechanische Verbindung zwischen Tragkörper und Folie, z. B. eine Rast- oder eine Klettverbindung oder auch eine Klebeverbindung. Diese Verbindungen reichen zur Fixierung und sind sehr einfach herzustellen.

Hierdurch erzielt man eine vorteilhafte Ausnutzung der Gesamtfläche der schwimmfähigen Wasserabdeckfolie auf dem Reservoir und darüberhinaus gestattet sich über die tragende Folie ein Zugang zu den einzelnen Modulen für Wartungsarbeiten an einzelnen Photovoltaik Modulen, bzw. ihren Tragkörpern. Die Trag- oder Schwimmkörper und die in aller Regel schwimmfähige Folie bilden dabei ein gemeinsames Tragsystem, welches größere und schwerere Module erlaubt als bisher und zudem einen "trockenen" Zugang ermöglicht. Eine symmetrische Anordnung der Trag- oder Schwimmkörper, welche auf der Folie genügend Abstand zwischen den Trag- oder Schwimmkörpern für Gehwege bereitstellt, bietet dafür ausreichende Möglichkeiten.

Auf diese Weise lässt sich eine beliebige Anzahl von flächigen Modulen zur Energieerzeugung und/oder Energieumwandlung auf einfache Art zu einer Energieerzeugungseinrichtung zusammenbauen.

Einem flächigen Modul, das z.B. beidseitig mit zwei gleich großen Trag- oder Schwimmkörpern verbunden ist, kann durch die beiden Trag- oder Schwimmkörper, eine sichere horizontale Ausrichtung gegeben werden, wenn die Sonne im Zenit steht, was in Äquatornahe der Fall ist.

Vorteilhafterweise sind solche flächigen Module als Wärmetauscher, also thermisch arbeitende Sonnenkollektoren oder als Solarmodule bzw. Photovoltaik-Zellen ausgebildet. Wärmetauscher oder Solarkollektoren arbeiten z.B. mit einem Kühlmittel, welches durch Sonneneinstrahlung in den Modulen verdampft, unter Wärmeabgabe wieder kondensiert und die Wärme zur Energieerzeugung liefert. Solarmodule wandeln z.B. Sonnenlicht direkt in elektrische Energie um, wobei das Modul aus Solarzellen bzw. Photovoltaik-Zellen besteht, die in Serie oder parallel geschaltet sind.

Eine weitere vorteilhafte Ausbildung besteht darin, dass die Trag- oder Schwimmkörper zylindrisch ausgebildet und parallel zueinander angeordnet sind. Die Tragkörper können zwei parallel angeordnete, zylindrische Körper sein. Diese Körper können denselben oder einen unterschiedlichen Durchmesser haben.

Eine weitere vorteilhafte Ausbildung besteht darin, dass mehrere Trag- oder Schwimmkörper miteinander verbunden sind, vorzugsweise über eine mechanische, lösbare Verbindung oder über eine Klebeverbindung. Werden so z.B. mehrere Photovoltaik Module in Reihe über eine mechanische Verbindung wie z.B. einen Klettverschluss in einer brückenähnlichen Anordnung auf die zwei zylindrische Körper aufgelegt. Der Tragkörper kann in seinen Ausmaßen so sein, dass mehrere Photovoltaik-Zellen auf ihm befestigt werden können. So lassen sich mehrere hintereinander liegende Reihen schaltungsmäßig verbundenen liegenden Photovoltaik Modulen auf den Tragkörpern anbringen, so dass auf einfache Weise die gesamte Wasserfläche des Reservoirs ausgenutzt werden kann.

Eine weitere vorteilhafte Ausbildung besteht darin, dass die Trag- oder Schwimmkörper, insbesondere in starrer Ausführung, von vornherein Einrichtungen zur Aufnahme von Kabeln, Steuerleitungen oder Mediumsleitungen aufweisen oder dass die Trag- oder Schwimmkörper solche Leitungen bereits integriert aufweisen, die aneinander anschließbar sind. Damit erleichtert sich ebenfalls die Montage der Verdrahtung/ Verkabelung der Module

Die erprobt auch in großen Mengen einfach herstellbare Ausbildung besteht weiterhin darin, dass die Trag- oder Schwimmkörper und/oder die das Flüssigkeitsreservoir abdeckende Folie aus polymerem und/oder elastomerem Kunststoff oder aus einer Kautschukmischung, landläufig Gummi, bestehen.

Eine weitere vorteilhafte Ausbildung besteht darin, dass die Trag- oder Schwimmkörper unterschiedlich groß ausgebildet sind. Es entsteht so eine Neigung des z.B. auf zwei parallelen Tragkörpern angeordneten Photovoltaik Moduls. Eine solche Neigung nach links oder rechts dient der möglichst idealen Nutzung der Sonneneinstrahlung. Das erleichtert die Ausbildung statisch ausgerichteter Systeme, die z. B. nach der Hauptrichtung der Sonneneinstrahlung "fest" montiert sind.

Ein erfindungsgemäßes schwimmendes Energieerzeugungssystems mit Trag- oder Schwimmkörper aus einer Abdeckfolie lässt sich in besonders vorteilhafter Weise auf einem (oberen) Stausee eines Pumpspeicherwerks verwenden. Damit kann die für die hydraulische Speicherung erforderliche Pumpenergie zur Förderung auf "Hochniveau" mindestens teilweise über die auf der Oberfläche des Stausees angeordnete Energieerzeugungseinrichtung erzeugt werden, was den Effizienzgrad solcher Pumpspeicherwerke enorm steigert.

Auch allgemein auf miteinander verbundenen Flüssigkeitsreservoirs ist die Verwendung eines erfindungsgemäßen schwimmenden Energieerzeugungssystems vorteilhaft. Flüssigkeitsreservoirs bzw. Wasserreservoirs in semi-ariden Gebieten bekommen damit eine zweite wichtige Funktion. Sie können nunmehr auch unabhängig von einem Anschluss an die Stromversorgung und ohne einen mit Kraftstoff zu versorgenden Stromgenerator zur Wasserlagerung und als Pumpstation genutzt werden. Mehrere über ein Rohrleitungsnetz verbundene Wasserreservoirs können weiträumig als hydraulische Puffer genutzt werden. Ein solches System dient dann der Wasser- und Stromversorgung in semi-ariden Gebieten genauso wie in urbanen und landwirtschaftlich genutzten Räumen.

Für die Anwendung mit Trinkwasserreservoirs sollten mindestens die mit der Flüssigkeitsoberfläche in Berührung kommenden Teile der Einrichtung, also solche Teile der Trag- oder Schwimmkörper, der evtl. vorhandenen Abdeckfolie und auch der Module aus lebensmittelrechtlich unbedenklichen Kunststoffmaterialen bestehen, z. B. gemäß der jeweils gültigen Ausführung des US Standard NSF/ANSI 61, z.B der NSF/ANSI 61-2010a oder anderen nationalen oder internationalen lebensmittelrechtlichen oder wasserrechtlichen Standards oder Normen ausgebildet sind. Damit ist ohne Weiteres eine Anwendung für Trinkwasserreservoire möglich.

Anhand eines Ausführungsbeispieles soll die Erfindung näher erläutert werden. Es zeigen
- Fig. 1: ein erfindungsgemäßes schwimmendes Energieerzeugungssystem mit waagerecht ausgerichtetem Photovoltaik-Modul auf einer Folie zur Abdeckung eines Flüssigkeitsreservoirs
- Fig. 2: Ein erfindungsgemäßes schwimmendes Energieerzeugungssystem mit Trag- oder Schwimmkörpern unterschiedlicher Größe auf einer Folie zur Abdeckung eines Flüssigkeitsreservoirs
- Fig. 3: eine weitere Ausführung eines erfindungsgemäßen schwimmenden Energieerzeugungs systems
- Fig. 4: eine Vielzahl von Energieerzeugungssystemen, angeordnet auf der eine Oberfläche eines Flüssigkeitsreservoirs abdeckenden Folie

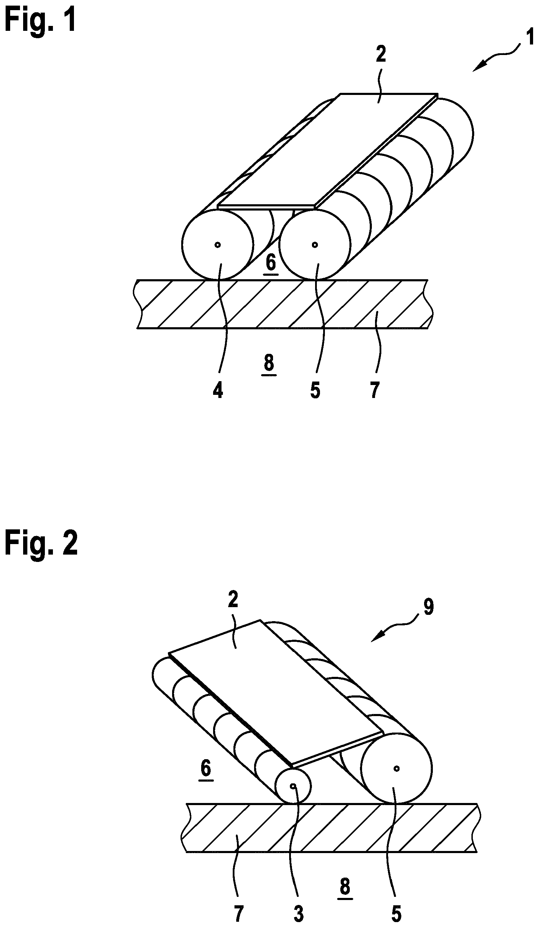

Die Fig. 1 zeigt ein erfindungsgemäßes schwimmendes Energieerzeugungssystem 1, welches ein flächiges Modul 2 zur Energieerzeugung und/oder Energieumwandlung aufweist, hier ein Photovoltaik- Modul, welches mit zwei Trag- oder Schwimmkörpern 4 und 5 verbunden ist. Die Trag- oder Schwimmkörper 4 und 5 sind auf einer Oberfläche 6 einer ein Flüssigkeitsreservoir 8 abdeckenden Folie 7 angeordnet und mit letzterer verbunden. Die Trag- oder Schwimmkörper 4 und 5 weisen eine mit Luft befüllbare abgedichtete Kammer auf.

Die Trag- oder Schwimmkörper 4 und 5 sind zylindrisch ausgebildet, parallel zueinander angeordnet und bestehen aus einer Kautschukmischung, d.h. aus Gummi. Sie sind durch schraubenförmige Wicklung miteinander vulkanisierter Gummistreifen hergestellt. Die mehrlagige Folie 7 besteht aus Polymer-Kunststoff.

Fig. 2 zeigt ein erfindungsgemäßes schwimmendes Energieerzeugungssystem 9 ähnlich dem in der der Fig. 1, jedoch mit Trag- oder Schwimmkörpern 3 und 5 unterschiedlicher Größe auf der Oberfläche 6 einer Folie 7 zur Abdeckung eines Flüssigkeitsreservoirs 8.

Während in dem in der Fig. 1 dargestellten Zustand das Photovoltaik-Modul 2 nahezu waagerecht bzw. horizontal ausgerichtet ist und etwa in der Mittagszeit in Äquatornähe, wenn die Sonnen im Zenit steht, zeigt Fig. 2, in der ein das Photovoltaik-Modul 2 mit zwei unterschiedlich groß ausgebildeten Trag- oder Schwimmkörpern 3 und 5 verbunden ist, eine eingestellte feststehende Neigung, wie sie beispielsweise vorteilhaft sein kann bei schwimmenden Energieerzeugungseinrichtungen für Flüssigkeitsreservoirs außerhalb der Äquatorzonen oder gar nördlich oder südlich der Wendekreise genutzt werden.

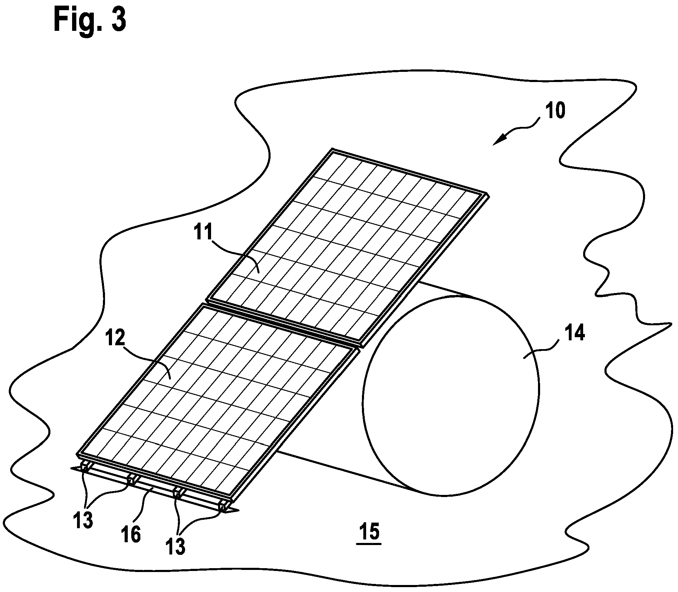

Fig. 3 zeigt eine andere Ausführung eines erfindungsgemäßen schwimmenden Energieerzeugungssystems 10, bei dem zwei flächige Photovoltaik- Module 11 und 12 auf Tragschienen 13 angeordnet sind. Die Tragschienen mit den Modulen sind einerseits mit einem Trag- oder Schwimmkörper 14 verbunden, welcher wiederum auf einer Oberfläche einer ein Flüssigkeitsreservoir abdeckenden Folie 15 angeordnet ist und liegen andererseits über eine geklebte Auflage 16 direkt auf der Folie 15 auf.

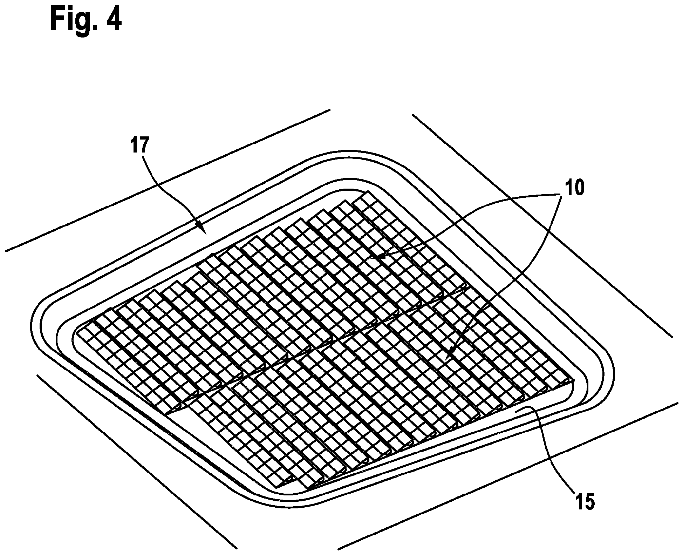

Fig. 4 zeigt in der Übersicht eine Vielzahl solcher Energieerzeugungssysteme 10, angeordnet auf der die Oberfläche eines Flüssigkeitsreservoirs 17 abdeckenden Folie 15.

### Bezugszeichenliste

### (Teil der Beschreibung)

- 1: Schwimmendes Energieerzeugungssystem
- 2: Flächiges Modul zur Energieerzeugung
- 3: Trag- oder Schwimmkörper
- 4: Trag- oder Schwimmkörper
- 5: Trag- oder Schwimmkörper
- 6: Folienoberfläche
- 7: Abdeckfolie für Flüssigkeitsreservoir
- 8: Flüssigkeitsreservoir
- 9: Schwimmendes Energieerzeugungssystem
- 10: Schwimmendes Energieerzeugungssystem
- 11: Photovoltaik- Modul
- 12: Photovoltaik- Modul
- 13: Trag schiene
- 14: Trag- oder Schwimmkörper
- 15: Folie
- 16: Auflage
- 17: Flüssigkeitsreservoir

## Patentansprüche

1. Schwimmendes Energieerzeugungssystem (1, 9), welches ein oder mehrere flächige Module (2, 11, 12) zur Energieerzeugung und/oder Energieumwandlung aufweist, vorzugsweise Photovoltaik-Zellen oder Sonnenkollektoren, die mit mindestens einem Trag- oder Schwimmkörper (3, 4, 5, 14) verbunden sind, wobei die Trag- oder Schwimmkörper (3, 4, 5, 14) auf einer Oberfläche (6) einer ein Flüssigkeitsreservoir (8) abdeckenden Folie (7, 15) angeordnet und mit letzterer verbunden sind, wobei die Trag- oder Schwimmkörper (3, 4, 5, 14) eine oder mehrere mit einem Medium befüllbare abgedichtete Kammern aufweisen, und bei dem die Trag- oder Schwimmkörper (3, 4, 5, 14) und/oder die das Flüssigkeitsreservoir (8) abdeckenden Folie (7, 15) aus polymerem und/oder elastomerem Kunststoff oder aus einer Kautschukmischung bestehen..

2. Schwimmendes Energieerzeugungssystem nach Anspruch 1, bei dem die Trag- oder Schwimmkörper (3, 4, 5, 14) lösbar mit der Folie (7, 15) verbunden sind, vorzugsweise durch eine Rast- oder Klettverbindung , oder über eine Klebeverbindung mit der Folie (7, 15) verbunden sind.

3. Schwimmendes Energieerzeugungssystem nach Anspruch 1 oder 2, bei dem die Trag- oder Schwimmkörper (3, 4, 5, 14) zylindrisch ausgebildet und parallel zueinander angeordnet sind.

4. Schwimmendes Energieerzeugungssystem nach einem der Ansprüche 1 bis 3, bei dem mehrere Trag- oder Schwimmkörper (3, 4, 5, 14) miteinander verbunden sind, vorzugsweise über eine mechanische, lösbare Verbindung oder über eine Klebeverbindung.

5. Schwimmendes Energieerzeugungssystem nach einem der Ansprüche 1 bis 4, bei dem die Trag- oder Schwimmkörper (3, 4, 5, 14) Einrichtungen zur Aufnahme von Kabeln, Steuerleitungen oder Mediumsleitungen aufweisen oder bei dem die Trag- oder Schwimmkörper solche Leitungen bereits integriert aufweisen.

6. Schwimmendes Energieerzeugungssystem nach einem der Ansprüche 1 bis 5, bei dem die Trag- oder Schwimmkörper (3, 5) unterschiedlich groß ausgebildet sind.

7. Schwimmendes Energieerzeugungssystem nach einem der Ansprüche 1 bis 6, bei dem mehrere flächige Module (11, 12) zur Energieerzeugung über Tragschienen (13) einerseits mit einem Trag- oder Schwimmkörper (14) und andererseits durch eine Auflage (16) mit einer ein Flüssigkeitsreservoir abdeckenden Folie (15) verbunden sind.

8. Verwendung eines schwimmenden Energieerzeugungssystems nach einem der Ansprüche 1 bis 7 auf einem Stausee eines Pumpspeicherwerks oder auf miteinander verbundenen Flüssigkeitsreservoirs.

## Claims

1. Floating power generation system (1, 9) that has one or more flat modules (2, 11, 12) for power generation and/or power conversion, preferably photovoltaic cells or solar collectors, which are connected to at least one supporting body or float (3, 4, 5, 14), wherein the supporting bodies or floats (3, 4, 5, 14) are arranged on a surface (6) of a sheet (7, 15) covering a liquid reservoir (8) and are connected to said sheet, the supporting bodies or floats (3, 4, 5, 14) having one or more sealed chambers that can be filled with a medium, and in which the supporting bodies or floats (3, 4, 5, 14) and/or the sheet (7, 15) covering the liquid reservoir (8) consist(s) of polymeric and/or elastomeric material or of a caoutchouc mixture.

2. Floating power generation system according to Claim 1, in which the supporting bodies or floats (3, 4, 5, 14) are releasably connected to the sheet (7, 15), preferably by a latching or hook-and-loop connection, or are connected to the sheet (7, 15) by way of an adhesively bonded connection.

3. Floating power generation system according to Claim 1 or 2, in which the supporting bodies or floats (3, 4, 5, 14) are cylindrically formed and arranged parallel to one another.

4. Floating power generation system according to one of Claims 1 to 3, in which a number of supporting bodies or floats (3, 4, 5, 14) are connected to one another, preferably by way of a mechanical, releasable connection or by way of an adhesively bonded connection.

5. Floating power generation system according to one of Claims 1 to 4, in which the supporting bodies or floats (3, 4, 5, 14) have devices for receiving cables, control lines or media lines, or in which the supporting bodies or floats have such lines already integrated.

6. Floating power generation system according to one of Claims 1 to 5, in which the supporting bodies or floats (3, 5) are designed to be of different sizes.

7. Floating power generation system according to one of Claims 1 to 6, in which a number of flat modules (11, 12) for power generation are on the one hand connected to a supporting body or float (14) by way of supporting rails (13) and on the other hand are connected to a sheet (15) covering a liquid reservoir by means of a rest (16).

8. Use of a floating power generation system according to one of Claims 1 to 7 on a reservoir of a pumped storage plant or on interconnected liquid reservoirs.

## Revendications

1. Système de génération d'énergie flottant (1, 9) qui comporte au moins un module (2, 11, 12) sensiblement bidimensionnel destiné à générer et/ou convertir de l'énergie, de préférence des cellules photovoltaïques ou des panneaux solaires, qui sont reliés à au moins un corps porteur ou flottant (3, 4, 5, 14), les corps porteurs ou flottants (3, 4, 5, 14) étant disposés sur une surface (6) d'un film (7, 15) recouvrant un réservoir de liquide (8) et étant reliés audit film, les corps porteurs ou flottants (3, 4, 5, 14) comportant au moins une chambre étanchéifiée qui peut être remplie d'un milieu et les corps porteurs ou flottants (3, 4, 5, 14) et/ou le film (7, 15) recouvrant le réservoir de liquide (8) étant en polymère et/ou en matière synthétique élastomère ou mélange de caoutchoucs.

2. Système de génération d'énergie flottant selon la revendication 1, les corps porteurs ou flottants (3, 4, 5, 14) étant reliés de manière amovible au film (7, 15), de préférence au moyen d'une liaison par encliquetage ou velcro, ou au film (7, 15) au moyen d'une liaison adhésive.

3. Système de génération d'énergie flottant selon la revendication 1 ou 2, les corps porteurs ou flottants (3, 4, 5, 14) étant cylindriques et étant disposés parallèlement les uns aux autres.

4. Système de génération d'énergie flottant selon l'une des revendications 1 à 3, une pluralité de corps porteurs ou flottants (3, 4, 5, 14) étant reliés entre eux, de préférence au moyen d'une liaison mécanique amovible ou d'une liaison adhésive.

5. Système de génération d'énergie flottant selon l'une des revendications 1 à 4, les corps porteurs ou flottants (3, 4, 5, 14) comportant des dispositifs de réception d'éléments tels que des câbles, des lignes de commande ou des conduits de milieu ou les corps porteurs ou flottants comportant de tels éléments déjà intégrés.

6. Système de génération d'énergie flottant selon l'une des revendications 1 à 5, les corps porteurs ou flottants (3, 5) étant de tailles différentes.

7. Système de génération d'énergie flottant selon l'une des revendications 1 à 6, une pluralité de modules (11, 12) sensiblement bidimensionnels destinés à générer de l'énergie étant reliés par le biais de rails porteurs (13) d'une part à un corps porteur ou flottant (14) et d'autre part par le biais d'un support (16) à un film (15) recouvrant un réservoir de liquide.

8. Utilisation d'un système de génération d'énergie flottant selon l'une des revendications 1 à 7 sur un lac de retenue d'une centrale à accumulation par pompage ou sur des réservoirs de liquide reliés entre eux.
